# EUROPEAN PATENT APPLICATION

(11) **EP 4 549 375 A1**
(43) Date of publication of application: **07.05.2025**
(21) Application number: 23306896.4
(22) Date of filing: 31.10.2023
(51) Int. Cl.: C01B 3/12, C01B 3/38

(54) **ELECTRIC REACTOR FOR SYNGAS GENERATION**

(71) Applicant: Technip Energies France, 92741 Nanterre Cedex (FR)
(72) Inventor: Riegman, Jan-Jaap, 2700AB Zoetermeer (NL); Wanders, Mark, 2700AB Zoetermeer (NL)
(74) Representative: Edson, Russell Gregory

(57) **Abstract**

A system can include a feedstock mixer, an electric reactor, and a heat exchanger reactor. The feedstock mixer can be coupled with a hydrogen source and a carbon dioxide source to provide a mixed feedstock. The electric reactor can be coupled with the feedstock mixer to receive a first portion of the mixed feedstock. The electric reactor can use electricity to generate heat. The heat can be used to facilitate an rWGS reaction or a steam reforming process using the first portion, which can produce a heated first reactor effluent as a byproduct. The heat exchanger reactor can be coupled with (i) the feedstock mixer to receive a second portion of the mixed feedstock to generate an rWGS output that includes syngas, and (ii) the electric reactor to receive the heated first reactor effluent to provide heat to facilitate generating the rWGS output.

## Description

### Technical Field

The present disclosure relates generally to chemical processing and, more particularly (although not necessarily exclusively), to using an electric reactor in a workflow for generating synthesis gas (syngas).

### Background

Energy is transitioning away from traditional fossil fuels and other traditional hydrocarbon fuel sources in an effort to reduce carbon emissions. In many industries, carbon utilization has become an important consideration. One way to improve carbon utilization is to generate synthesis gas (syngas) using carbon dioxide as an input. Syngas includes a mixture of carbon monoxide and hydrogen gas. The syngas can be used to generate fuel products and chemicals in downstream processes.

### Brief Description of the Drawings

FIG. 1 is a flow diagram of showing the operation of a system with an electric reactor usable to generate syngas according to some examples of the present disclosure.
FIG. 2 is a flowchart of a process for generating a syngas using an electric reactor according to some examples of the present disclosure.
FIG. 3 is a flow diagram showing the operation of a system usable to generate a syngas, where the system employs off-gas recycling according to some examples of the present disclosure.
FIG. 4 is a flowchart of a process for generating a syngas an electric reactor and off-gas recycling according to some examples of the present disclosure.

### Detailed Description

Certain aspects and features of the present disclosure relate to a synthesis gas (syngas) generation system that includes an electric reactor that can be used to generate syngas. The syngas generation system can use carbon dioxide, water, hydrogen gas, methane, and other suitable inputs to generate the syngas. In some examples, the electric reactor can be used to perform some or all of a reverse water-gas shift (rWGS) reaction on an input mixture of carbon dioxide and hydrogen to generate an output mixture of carbon monoxide and water. The output mixture may then be used as an input to a heat exchanger reactor that is separate from the electric reactor within the syngas generation system to generate the syngas. Because the rWGS reactions require high temperature to optimize conversion to syngas, the electric reactor may use electricity to generate heat, which can provide enhanced efficiency, enhanced control, reduced emissions, and the like compared to other reactors that may use a fired source, such as hydrocarbon fuel, to generate heat. Additionally or alternatively to performing the rWGS reaction, the electric reactor may perform a steam reforming process. The output from the steam reforming process can be used to provide heat to the heat exchanger reactor. In some examples, the heat exchanger reactor can perform the steam reforming process.

Energy in modern time is beginning to transition, for example from fossil fuels or other hydrocarbon-based fuels to electricity and other energy sources that are low-to-no direct emission. Due to the energy transition, there may be interest in reducing carbon utilization. One potential pathway involving reducing carbon utilization may include converting carbon dioxide with hydrogen into a carbon monoxide and a hydrogen-rich gas such as syngas. The syngas can be further converted into other chemicals such as synthetic fuels, alcohols, aldehydes and other carbon-based chemicals. One technique that may be involved in converting carbon dioxide to syngas may be include reverse water-gas shift (rWGS) reactions. Some existing systems may use a fired heater to perform these rWGS reactions. But, fired heaters may increase carbon emissions or emissions of other toxic pollutants, and often use excessive amounts of energy.

Some examples of the present disclosure overcome one or more of the abovementioned problems by using an electrically powered reactor (or "electric reactor") that avoids generating the harmful carbon emissions of fired heaters. The electric reactor can perform the rWGS. Additionally, in some examples, the off-gasses from downstream syngas processing units can recycled and converted into syngas as well via a reforming process. Such off-gasses can include hydrocarbons, unconverted carbon monoxide, carbon dioxide, and hydrogen. Converting the off-gasses into syngas as well can help optimize the system and reduce harmful off-gas byproducts as well as reduce hydrogen and carbon dioxide feedstock requirements. The offgasses are converted in the electric reactor and can be combined with the rWGS reaction or instead of the rWGS reaction in the electric reactor.

More specifically, some examples of the present disclosure can employ a reactor system that includes an electric reactor and a heat exchanger reactor. The electric reactor can include an electrically powered heating device, such as a resistive coil, to generate heat to power an rWGS reaction. This can be more reliable and efficient, and produce less carbon emissions and other harmful emissions, than using a fired heater. The reactor system can be used for carrying out an rWGS reaction of an input feedstock that can include carbon dioxide and hydrogen. The reactor system as described herein can reduce overall hydrogen consumption by eliminating hydrogen as a fuel and by better utilization of the available heat for driving the reactions. Additionally, the system can have an improved efficiency of converting hydrogen to syngas due to a reduction of the input carbon dioxide feed per syngas product. The reduction of hydrogen for the process can be approximately 15% or more, which can correspond into approximately a 15% savings in power, or more, for electrolyzers, as well as approximately a 15%, or more, smaller electrolyzer facility. The rWGS unit can initially use more power for the electric reactors, which, in combination with the foregoing, can result in an overall power consumption reduction of more than approximately 4%. The combined savings in power and better utilization of carbon dioxide and hydrogen can result in an improved carbon intensity and energy efficiency.

As noted above, by replacing the fired heater with an electrically powered heater, no firing may occur in the system. As a result, in some examples the system may produce no direct emissions, such as nitrogen oxide or carbon dioxide emissions formed during a combustion process. Therefore, the system can reduce an overall carbon footprint compared to other systems.

In some examples, the system can have power intermittency due to availability of renewable energy. If power availability is limited, such as limited wind or solar power, the split ratio between the electric reactor and the heat exchanger reactor can be adjusted. The hydrogen consumption and the duty in the electric reactor can be reduced while maintaining the same product quality at a reduced capacity. This way, downstream units can still operate within a stable operating window. Conversely, if excess renewable power is available, more flow can be sent to the electric reactor, for example compared to the heat exchanger reactor, and the electric reactor can temporarily use more power while keeping the product quality constant. Thus, the system can support balancing the power grid.

These illustrative examples are given to introduce the reader to the general subject matter discussed here and are not intended to limit the scope of the disclosed concepts. The following sections describe various additional features and examples with reference to the drawings in which like numerals indicate like elements but, like the illustrative examples, should not be used to limit the present disclosure.

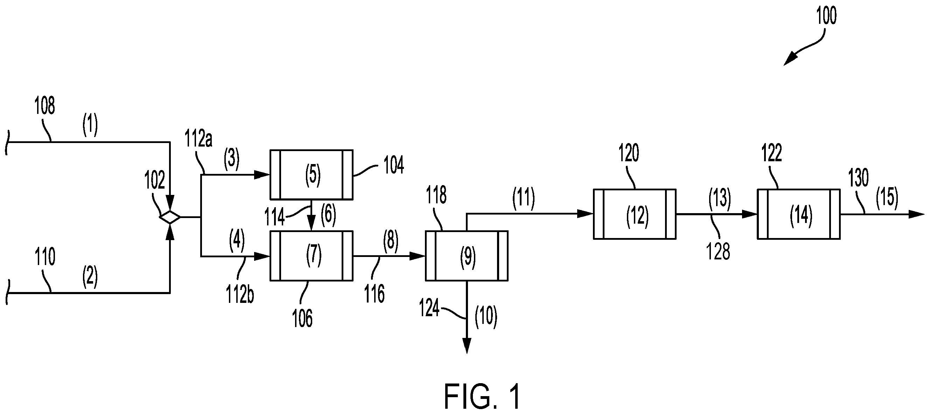

FIG. 1 is a flow diagram of the operation of a system 100 usable to generate a syngas according to some examples of the present disclosure. The system 100 can use an electrified process for producing syngas 128 from mixed feedstock, which can include carbon dioxide and hydrogen. The system 100 can minimize an overall energy input since electricity is used instead of a fire-based heater. And, in some cases, the system 100 may produce no direct emissions to the atmosphere.

In the electrified process performed by the system 100, various reactions can take place in the electric reactor 105 and/or the heat exchange reactor 106. For example, a reverse water-gas shift (rWGS) reaction can take place in the electric reactor 105, the heat exchange reactor 106, or both. Additionally or alternatively, hydrocarbons can be converted according to a steam reforming reaction that can take place in the electric reactor 105, the heat exchange reactor 106, or both.

The rWGS reaction can describe or involve a conversion of carbon dioxide with hydrogen to carbon monoxide and water: 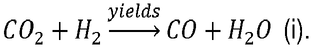 The terms "reforming" and "methane reforming" can denote a reforming reaction according to one or more of the following reactions:
- 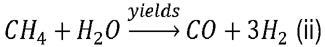
- 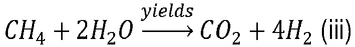
-

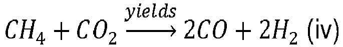

Reactions (ii) and (iii) can be or include steam methane reforming reactions, while reaction (iv) may be or include a dry methane reforming reaction. For higher hydrocarbons, such as *CₙHₘ* where *n* ≥ 2 and *m* ≥ 4, reaction (ii) can be generalized as: 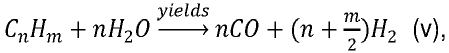 where ≥ 2 and *m* ≥ 4. In some examples, reforming can be accompanied by reaction (i). Additionally or alternatively, The term "steam methane reforming" may refer to reactions (ii) and (iii) running from left-to-right, which may indicate a conversion of methane, while the term "methanation" may refer to reactions (i) or (ii) running from right-to-left, which may indicate formation of methane. Additionally or alternatively, the term "steam methane reforming/methanation reactions" may refer to reactions (i) and (ii) running towards equilibrium. The term "reverse water-gas shift" may refer to reaction (i) running, for example, from right-to-left. In some examples, the reactions may be approximately at, or close to, equilibrium at an outlet from a catalyst bed or a catalyst zone of a corresponding reactor.

The reactions may be endothermic and the equilibrium to carbon monoxide may be favored by high temperatures, such as above 500 °C (e.g., 700 - 1100 °C or higher), and may take place over a catalyst. The process can involve a syngas generation section that has a high temperature reactor. For optimization, the syngas generation can be split into two reaction reactors. A first reactor, such as an electric reactor 104 can be powered by electric heating such as by resistance heating, high frequency heating, conductive heating, or the like. A heated first reactor effluent 114 can include high-grade heat, and the heated first reactor effluent 114 can be sent to a shell side of a heat exchanger reactor 106 in parallel to the electric reactor 104. On a tube side of the electric reactor 104, part of the feed can be fed over a catalyst bed where the heat can be provided by the shell side of the heat exchanger reactor 106. A tube outlet can be mixed with the electric reactor effluent internally in the heat exchanger reactor 106 or externally, for example by mixing the shell and tube outlet outside the heat exchanger reactor. The total feedstock can be mixed by a feedstock mixer 102 and can be split between the electric reactor 104 and the heat exchanger reactor 106. In a particular example, approximately 20-50% of the flow can be fed to the heat exchanger reactor 106, though other suitable percentages of the flow are possible.

As illustrated in FIG. 1, the system 100 can include a feedstock mixer 102, an electric reactor 104, and a heat exchanger reactor 106. The system 100 can include any other or additional suitable components. The feedstock mixer 102 may be any component or connection of components (e.g., connected pipes) for mixing fluids together. The feedstock mixer 102 may be coupled, such as fluidically coupled, with one or more stream sources. For example, the feedstock mixer 102 can be fluidically coupled with a hydrogen stream source 108 and a carbon-based material stream source 110, though the feedstock mixer 102 may be coupled with other or additional feedstock sources. In some examples, the carbon-based material stream source 110 may provide a carbon dioxide stream that includes high-purity (e.g., higher than approximately 80%) carbon dioxide. Additionally or alternatively, the hydrogen stream source 108 may provide a hydrogen stream that includes high-purity (e.g., higher than approximately 80%) hydrogen.

In some examples, the feedstock mixer 102 can receive hydrogen, such as hydrogen gas, from the hydrogen stream source 108 and can receive carbon dioxide, or other carbon-based materials, from the carbon-based material stream source 110. The feedstock mixer 102 can mix the hydrogen and the carbon dioxide to generate mixed feedstock. The feedstock mixer 102 can transmit a first portion 112a of the mixed feedstock to the electric reactor 104, and the feedstock mixer 102 can transmit a second portion 112b of the mixed feedstock to the heat exchanger reactor 106. In some examples, the first portion 112a may include similar or identical ratios of the hydrogen to the carbon dioxide, though differing ratios of the hydrogen to the carbon dioxide are possible. Additionally or alternatively, the first portion 112a may include similar or identical amounts of the mixed feedstock to the second portion 112b, though differing amounts of the mixed feedstock are possible for the first portion 112a and the second portion 112b.

In some examples, the mixed feedstock can include carbon dioxide feedstock and hydrogen feedstock. The carbon dioxide feedstock, or a carbon dioxide stream 110, can be or include any suitable carbon-dioxide-rich stream. For example, the carbon dioxide stream 110 can originate from or otherwise include a carbon capture unit, a direct air capture unit, a chemical source of carbon dioxide, or the like. The carbon dioxide stream 110 can include more than approximately 75%, more than approximately 80%, more than approximately 85%, more than approximately 90%, more than approximately 95%, more than approximately 99%, or more of carbon dioxide. In some examples, the carbon dioxide feedstock can include poisons for the downstream catalyst, and some pretreatment and purification of the carbon dioxide stream may be performed. An example of the pretreatment and purification may be or include removing sulfurous components.

The hydrogen feedstock, or the hydrogen stream 108, can be or include any hydrogen-rich gas. The hydrogen stream 108 can include more than approximately 75%, more than approximately 80%, more than approximately 85%, more than approximately 90% hydrogen, more than approximately 95%, more than approximately 99%, or more of hydrogen. The hydrogen may originate from an on-purpose hydrogen generation, for example from reforming of hydrocarbons, pyrolysis, or upgrading of a hydrogencontaining stream. In a particular example, the hydrogen can be generated by electrolysis of water. As the process produces water as a by-product, a significant part of the water for the electrolysis can be recycled from the electric reactor 104. The feed pressure can be selected depending on the product pressure. In some examples, the feed pressure can be between approximately 10 barg and approximately 100 barg.

The hydrogen and the carbon dioxide can be preheated, for example to approximately 200 °C to approximately 400 °C. The heating can be performed in separate heat exchangers, after blending the two gasses, or the like. The mixture of hydrogen and carbon dioxide can be split, for example by the feedstock mixer 102, into the first portion 112a and into the second portion 112b. In some examples, a small amount, such as less than approximately 15%, of steam can be added to the portions to minimize formation of undesired byproducts or other contaminants. The portions can be superheated or can be heated inside the reactor prior to entering a catalyst bed, which may have a temperature of higher than 400 °C, such as a temperature above 550 °C.

The electric reactor 104 can receive the first portion 112a of the mixed feedstock and can facilitate an rWGS reaction using the first portion 112a of the mixed feedstock. For example, the first portion 112a can be preheated, such as prior to being received at the electric reactor 104 or subsequent to being received at the electric reactor 104 but prior to undergoing the rWGS reaction. The heated first portion 112a can then be transported to a first catalyst bed in the electric reactor 104. The first portion 112a can react with the first catalyst bed to generate a heated first reactor effluent 114, which can be transmitted from the electric reactor 104 to the heat exchanger reactor 106. The heat exchanger reactor 106 can receive the second portion 112b and the heated first reactor effluent 114 and can generate and output second reactor effluent, such as second reactor effluent, which may be or include reactor output 116 (e.g., an rWGS output) that includes syngas. In some examples, the second portion 112b can be preheated, such as prior to being received at the heat exchanger reactor 106 or subsequent to being received at the heat exchanger reactor 106 but prior to undergoing a reaction in the heat exchanger reactor 106. In a particular example, the second portion 112b can be heated using heat from the heated first reactor effluent 114. The heated second portion 112b can be transported to a second catalyst bed in the heat exchanger reactor 106, and a reaction, such as an rWGS reaction, can be performed with the heated second portion 112b to generate the reactor output 116.

The heated first reactor effluent 114, the reactor output 116, or a combination thereof may include one or more results of an rWGS reaction. For example, the heated first reactor effluent 114, the reactor output 116, or a combination thereof may include carbon monoxide, water, as well as unreacted carbon dioxide and hydrogen or the like. Additionally or alternatively, the heated first reactor effluent 114, the reactor output 116, or a combination thereof may include hydrogen gas, syngas, other suitable materials or any combination thereof.

Catalyst tubes can be used for superheating the second portion 112b, for example to a temperature higher than approximately 400 °C, by, for example, applying an inert structure of finning in examples in which the temperature may not be sufficiently high before entering the first catalyst bed. The outlet of the catalyst can have a temperature between approximately 700 °C and 1100 °C, to optimize the conversion of carbon dioxide and to minimize formation of methane. A hot heat exchanger effluent can be mixed with the heated first reactor effluent inside the heat exchanger reactor 106, and the combined effluent can provide heat for the rWGS reaction inside the catalyst tubes. The combined effluent can exit the reactor with a temperature of between approximately 300 °C and approximately 700 °C. A maximum split to the heat exchanger reactor in order to minimize overall power input into the electric reactor can be possible. In some examples, the hot effluent from the heat exchanger reactor can be blended with the cooled effluent from the electric reactor such as outside the heat exchanger reactor.

The system 100 can include one or more downstream processing subsystems. For example, the system 100 can include a condensate subsystem 118, a purification subsystem 120, and a synthesis plant 122. In other examples, the system 100 can include any suitable additional or alternative subsystems.

The mixed and cooled reactor effluent can be further cooled to recover the heat in a cooling train down to approximately 20 °C to approximately 50 °C, and the condensate can be removed via the condensate subsystem 118. The reactor effluent can be partially cooled by superheating and generation of steam to be used inside the condensate subsystem 118. Excess heat can be removed by air-cooling or by applying cooling water. The cooled effluent can be separated from the process condensate formed in a knock out drum. The condensate can be sent to a degasifier to remove dissolved gasses, and part of the dissolved gasses can be recycled to provide boiler feed water for the internal steam generation. Additionally or alternatively, the excess condensate can be further treated. In a particular example, the excess condensate can be purified, for example via the purification subsystem 120, and sent to the electrolyzers to produce part of the hydrogen stream for the rWGS reaction, which can minimize the input water for the hydrogen production.

The gaseous effluent can be conditioned in the purification subsystem 120 to ensure quality of a syngas product. The purification subsystem 120 can involve one or more of the following: i) a carbon dioxide capture unit to reduce the carbon dioxide content; ii) a hydrogen addition by blending or removing hydrogen to adjust the hydrogen-to-carbon monoxide ratio; and iii) impurity adsorption, for example ammonia formed in low ppm levels in case nitrogen can be present in either of the feedstocks. The carbon dioxide capture unit can remove the bulk of the carbon dioxide or can remove the carbon dioxide down to ppm level. The carbon dioxide capture unit can be any commercially available carbon dioxide capture technology such as (amine) adsorption process, pressure swing adsorption, temperature swing adsorption, a membrane, or the like. The captured carbon dioxide can be compressed and recycled as part of the carbon dioxide feedstock. In some examples in which a pure carbon monoxide stream may be used, a cryogenic process can be applied to separate the carbon monoxide from the other components.

In some examples, product syngas can be compressed and can be sent to a synthesis plant 122 that can include one or more pieces of equipment. For example, the synthesis plant 122 can include a downstream synthesis and upgrading unit, which can produce synthetic fuels for example through Fischer Tropsch synthesis. Additionally or alternatively, the synthesis plant 122 can include a methanol, ethanol, or di-methyl ether production unit and optional dehydration to olefins to produce plastics of synthetic fuels or other synthetic chemicals. From the synthesis plant 122, a target product 130, such as sustainable aviation fuel or methanol can be derived. Most of the targeted products can have several byproducts. These byproduct off-gas streams can include light gaseous components such as hydrogen, carbon monoxide, carbon dioxide, methane, or other hydrocarbons.

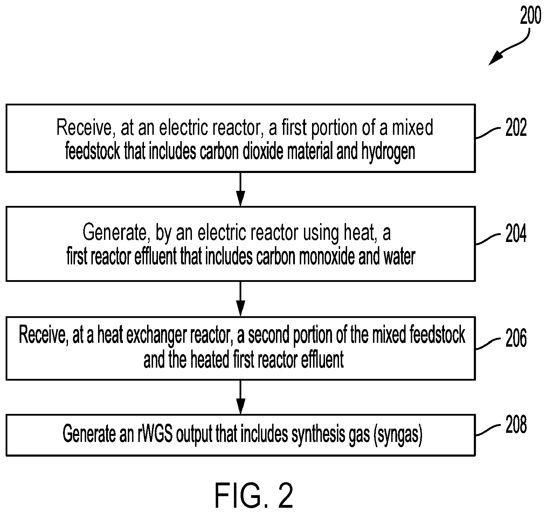

FIG. 2 is a flowchart of a process 200 for generating a syngas 128 using a system 100 according to some examples of the present disclosure. Other examples may involve more steps, fewer steps, different steps, or a different sequence of steps than are shown. The steps of FIG. 2 are described below with reference to the components of FIG. 1 above.

At block 202, a first portion 112a of mixed feedstock can be received at an electric reactor, such as the electric reactor 104. The first portion 112a can be received from a feedstock mixer 102 that may be configured to receive and mix hydrogen and carbon dioxide or other suitable carbon-based materials. A total volume or amount of the first portion 112a of feedstock transported to the electric reactor 104 may be adjusted based on an availability of emission-free energy for the electric reactor 104. For example, if a large amount of renewable energy, such as solar energy, wind energy, or the like, is available to use by the electric reactor 104, then the total volume transported to the electric reactor 104 may be increased and processed. Additionally or alternatively, if little-to-no renewable energy is available to use by the electric reactor 104, then the total volume transported to the electric reactor 104 may be decreased.

The first portion 112a of mixed feedstock can be heated prior to being received by the electric reactor 104. In other examples, the first portion 112a of mixed feedstock can be heated upon being received by the electric reactor 104, but prior to being used in a reaction in the electric reactor 104. The electric reactor 104 may be configured to heat the first portion 112a of mixed feedstock as well as provide heat for the reaction using electrical power (e.g., via a heating device such as a resistance heating device) or another power source that does not directly generate emissions to the atmosphere.

At block 204, a heated first reactor effluent 114 is generated by the electric reactor 104 using the first portion 112a of mixed feedstock and by the electric reactor 104 using electric heat. For example, the electric reactor 104 can cause an rWGS reaction to take place using the first portion 112a of mixed feedstock. The first portion 112a of mixed feedstock can be transported within the electric reactor 104 to contact a first catalyst bed to cause the rWGS reaction. The rWGS reaction may cause hydrogen and carbon dioxide from the first portion 112a of mixed feedstock to convert to the heated first reactor effluent 114, which can include carbon monoxide and water. The rWGS reaction may involve heating the first portion 112a of mixed feedstock. The electric reactor 104 can provide the heat for the first portion 112a of the mixed feedstock using electricity or other suitable fuel source that does not involve fire or direct emissions to the atmosphere. As another example, the electric reactor 104 can perform a steam reforming process, additionally or alternatively to performing an rWGS reaction, to generate the heated first reactor effluent 114. The heated first reactor effluent 114 can be transported to a separate reactor, such as the heat exchanger reactor 106, to facilitate producing an rWGS output that can include syngas.

At block 206, the heated first reactor effluent 114 and a second portion 112b of mixed feedstock is received at a heat exchanger reactor, such as the heat exchanger reactor 106. The second portion 112b of mixed feedstock may be similar or identical to the first portion 112a of mixed feedstock, in terms of its ratio of components. For example, the second portion 112b of mixed feedstock may have the same ratio of hydrogen to carbon dioxide as the first portion 112a of the mixed feedstock. In other examples, the second portion 112b of mixed feedstock may have a different ratio of hydrogen to carbon dioxide as the first portion 112a of the mixed feedstock. In a particular example, a total volume or amount of the second portion 112b of feedstock transported to the heat exchanger reactor 106 may be adjusted based on an availability of emission-free energy for the heat exchanger reactor 106.

The second portion 112b of mixed feedstock can be heated prior to being received by the heat exchanger reactor 106, subsequent to being received by the heat exchanger reactor 106, or a combination thereof. For example, the heat exchanger reactor 106 can use electricity to heat the second portion 112b of mixed feedstock upon receiving the second portion 112b of mixed feedstock. Additionally or alternatively, the second portion 112b of mixed feedstock may be heated, such as while in transport lines, while being transported to the heat exchanger reactor 106. In some examples, the heat exchanger reactor 106 can receive the second portion 112b of mixed feedstock and the heated first reactor effluent 114. The heat exchanger reactor 106 can then use the heat from the heated first reactor effluent 114 to provide at least a preheat for the second portion 112b of mixed feedstock.

At block 208, a reactor output 116, which includes syngas, is generated. The heat exchanger reactor 106 can facilitate one or more reactions, such as an rWGS reaction and/or a steam reforming reaction, using the heated first reactor effluent 114 and the second portion 112b of mixed feedstock to generate the reactor output 116. For example, the heat exchanger reactor 106 can receive the heated first reactor effluent 114, can receive the second portion 112b of mixed feedstock, and can cause the second portion 112b of mixed feedstock to be heated prior to the one or more reactions. The heated inputs can be transported to a second catalyst bed that can cause the one or more reactions to take place. The one or more reactions can generate the reactor output 116 that can include syngas, which may be or include hydrogen gas, hydrogen-based gas, or hydrogen-based material.

In some examples, the reactor output 116 can be further processed or refined prior to being output or otherwise used. For example, the reactor output 116 can be transported to a condensate subsystem 118, to a purification subsystem 120, to a synthesis plant 122, to other suitable post-processing devices, or to any combination thereof. The condensate subsystem 118 may cool the reactor output 116 to condense contaminants out of the reactor output 116 and to recover heat from the reactor output 116 to recycle to the electric reactor 104 or the heat exchanger reactor 106. The purification subsystem 120 can purify the reactor output 116 by removing carbon dioxide, ammonia-based contaminants, and other contaminants. The synthesis plant 122 may receive the condensed, purified rWGS output and may generate usable product such as fuels, methanol, ethanol, olefins, plastics, and the like.

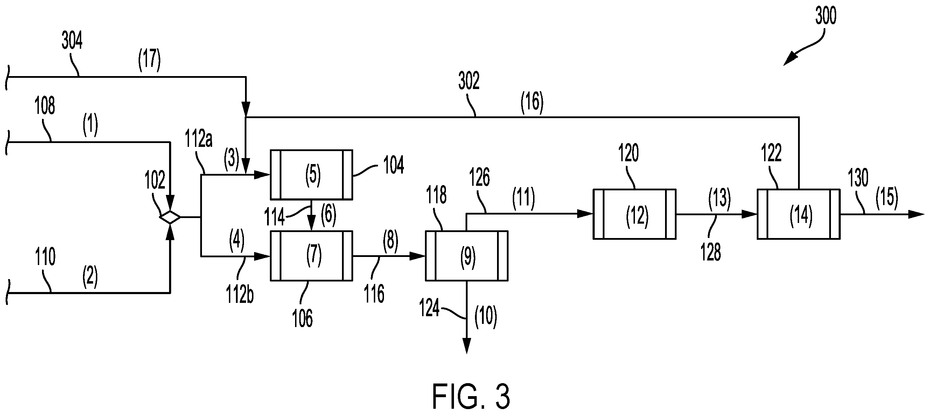

FIG. 3 is a flow diagram of the operation of a system 300 usable to generate syngas, where the system 300 employs off-gas recycling according to some examples of the present disclosure. As illustrated in FIG. 3, the system 300 can include a feedstock mixer 102, an electric reactor 104, and a heat exchanger reactor 106. The system 300 can include any other or additional suitable components. The feedstock mixer 102 may be coupled, such as fluidically coupled, with one or more stream sources. For example, the feedstock mixer 102 can be fluidically coupled with a hydrogen stream source 108 and a carbon-based material stream source 110, though the feedstock mixer 102 may be coupled with other or additional feedstock sources. In some examples, the carbon-based material stream source 110 may provide a carbon dioxide source stream that includes high-purity (e.g., higher than approximately 80%) carbon dioxide. Additionally or alternatively, the hydrogen stream source 108 may provide a hydrogen source stream that includes high-purity (e.g., higher than approximately 80%) hydrogen.

In some examples, the feedstock mixer 102 can receive hydrogen, such as hydrogen gas, from the hydrogen stream source 108 and can receive carbon dioxide, or other carbon-based materials, from the carbon-based material stream source 110. The feedstock mixer 102 can mix the hydrogen and the carbon dioxide to generate mixed feedstock. The feedstock mixer 102 can transmit a first portion 112a of the mixed feedstock to the electric reactor 104, and the feedstock mixer 102 can transmit a second portion 112b of the mixed feedstock to the heat exchanger reactor 106. In some examples, the first portion 112a may include similar or identical ratios of the hydrogen to the carbon dioxide as that of the second portion 112b, though differing ratios of the hydrogen to the carbon dioxide are possible. Additionally or alternatively, the first portion 112a may include similar or identical amounts of the mixed feedstock compared to that of the second portion 112b, though differing amounts of the mixed feedstock are possible for the first portion 112a and the second portion 112b.

In examples in which hydrocarbon-rich off-gas, such as recycled off-gas 302, is available, the recycled off-gas 302 can be transmitted to the electric reactor 104, which can act as a steam reforming reactor. Depending on a final composition and heat integration, part of the carbon dioxide, and optionally hydrogen, feed can be transmitted to the electric reactor 104. Recycling hydrocarbon off-gasses can close the carbon loop and can reduce an amount of hydrogen used in the reactions. As the hydrogen production by electrolysis may use most of the energy for the total production, using the recycled off-gas 302 can reduce an overall energy consumption of the reactions. Additionally or alternatively, as there may not be firing involved the hydrogen consumption, supplemental firing can be reduced further, which can reduce the overall energy consumption of the reactions. In some examples, the first portion 112a may be mixed with recycled off-gas 302, hydrocarbon product 304, or the like by the feedstock mixer 102, or by a separate component of the system 300 prior to being transmitted to the electric reactor 104.

The electric reactor 104 can receive the first portion 112a of the mixed feedstock and can facilitate an rWGS reaction using the first portion 112a of the mixed feedstock, the recycled off-gas 302, the hydrocarbon product 304, or any combination thereof. For example, the first portion 112a, the recycled off-gas 302, the hydrocarbon product 304, or any combination thereof can be preheated, such as prior to being received at the electric reactor 104 or subsequent to being received at the electric reactor 104 but prior to undergoing the rWGS reaction, and the heated first portion 112a, the recycled off-gas 302, the hydrocarbon product 304, or any combination thereof can be transported to a first catalyst bed in the electric reactor 104. The first portion 112a, the recycled off-gas 302, the hydrocarbon product 304, or any combination thereof can react with the first catalyst bed to generate a heated first reactor effluent 114, which can be transmitted from the electric reactor 104 to the heat exchanger reactor 106.

The heat exchanger reactor 106 can receive the second portion 112b and the heated first reactor effluent 114 and can generate and output second reactor effluent, such as second reactor effluent, which may be or include reactor output 116 that includes syngas. In some examples, the second portion 112b can be preheated, such as prior to being received at the heat exchanger reactor 106 or subsequent to being received at the heat exchanger reactor 106 but prior to undergoing a reaction in the heat exchanger reactor 106. In a particular example, the second portion 112b can be heated using heat from the heated first reactor effluent 114. The heated second portion 112b can be transported to a second catalyst bed in the heat exchanger reactor 106, and a reaction, such as an rWGS reaction, can be performed with the heated second portion 112b to generate the reactor output 116.

The heated first reactor effluent 114, the reactor output 116, or a combination thereof may include one or more results of an rWGS reaction. For example, the heated first reactor effluent 114, the reactor output 116, or a combination thereof may include carbon monoxide, water, as well as unreacted carbon dioxide and hydrogen or the like. Additionally or alternatively, the heated first reactor effluent 114, the reactor output 116, or a combination thereof may include hydrogen gas, syngas, other suitable materials or any combination thereof.

The system 300 can include one or more downstream processing subsystems. For example, the system 300 can include a condensate subsystem 118, a purification subsystem 120, and a synthesis plant 122. In other examples, the system 300 can include any suitable additional or alternative subsystems.

The reactor output 116 can be transmitted from the heat exchanger reactor 106 to the condensate subsystem 118 to cool the reactor output 116. The condensate subsystem 118 can cool the reactor output 116 to cause condensed material 124 to be removed from the reactor output 116 and to generate condensed syngas material 126. Additionally or alternatively, heat can be recovered from the reactor output 116 by the condensate subsystem 118 and recycled elsewhere, such as in the electric reactor 104 or the heat exchanger reactor 106, in the system 300.

The condensed syngas material 126 can be transmitted to the purification subsystem 120 to purify the condensed syngas material 126 by removing contaminants. In some examples, the purification subsystem 120 can include (i) a carbon capture subsystem to remove carbon dioxide or other carbon-based materials, (ii) an impurity adsorption subsystem to remove contaminants such as ammonia, and the like. The purification subsystem 120 can generate and output purified syngas material, such as purified syngas 128, which can be transmitted to the synthesis plant 122.

The synthesis plant 122 can generate a syngas product 130, which can include fuels, methanol, plastics, and the like using the purified syngas 128. Additionally or alternatively, the synthesis plant 122 can generate recycled off-gas 302. The recycled off-gas 302 may be or include a by-product of a process used by the synthesis plant 122 to generate the syngas product 130. In some examples, the recycled off-gas 302 may be or include a hydrogen-based off-gas that can be returned to the feedstock mixer 102 or to the electric reactor 104, so that the hydrogen-based off gas serves as an input to the system 300 to produce additional syngas. By using the hydrogen-based off gas as one of the inputs to the system 300, the system's 300 efficiency and productivity can be enhanced and less undesired side-products or emissions may be generated.

In some examples, the light off-gasses or byproducts can be recycled to the electric reactor 104. The recycled off-gas 302 can be mixed with steam and preheated, for example to approximately 400 °C to approximately 700 °C, and can be transmitted off of the catalyst bed where hydrocarbons can be converted to a syngas mixture through the steam reforming reaction. The recycled off-gas 302 may reduce an overall amount of hydrogen feedstock or of carbon dioxide feedstock for the reactions and may reduce the overall energy consumption of the system or the reactions. For example, the hydrogen feedstock or the carbon dioxide feedstock to the electric reactor can be reduced to less than approximately 50%, less than approximately 25%, or to zero as compared to other systems.

Additionally or alternatively to the off-gasses from the downstream units, in some examples a hydrocarbon product 304 or hydrogen-rich streams can be used as an input. For example, off-gasses from other units, natural gas, or biogas can be used, as well as (bio)-LPG or (bio)naphtha. Depending on a composition of the off-gasses, some pretreatment steps may be performed. The pretreatment steps may include one or more of the following: hydrogenation, desulfurization, dichlorination, carbon monoxide shift, or other contaminant adsorption processes.

Additionally or alternatively, in some examples the product from the electric reactor 104 receiving the off-gas streams 302 can be mixed with an oxygen or oxygen rich stream fed to an autothermal or oxidative reforming to convert more of the remaining hydrocarbons, before this product is fed to the heat exchanger reactor 106 to provide heat.

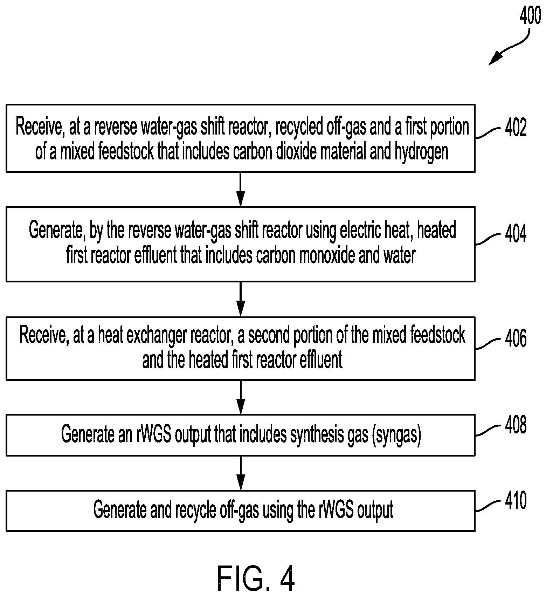

FIG. 4 is a flowchart of a process 400 for generating a syngas 128 using a system 300 with recycled off-gas 302 according to some examples of the present disclosure. Other examples may involve more steps, fewer steps, different steps, or a different sequence of steps than are shown. The steps of FIG. 4 are described below with reference to the components of FIG. 1 above.

At block 402, a first portion 112a of mixed feedstock and recycled off-gas, such as the recycled off-gas 302, can be received at an rWGS reactor such as the electric reactor 104. The first portion 112a can be received from a feedstock mixer 102 that may be configured to receive and mix hydrogen and carbon dioxide or other suitable carbon-based materials. The recycled off-gas 302 may be received from the feedstock mixer 102, may be received from one or more downstream post-processing subsystems, such as a synthesis plant 122, or a combination thereof. Additionally or alternatively, hydrocarbon product 304 may be mixed and received with the first portion 112a, the recycled off-gas 302, or a combination thereof. In some examples, a total volume or amount of the first portion 112a, the recycled off-gas 302, the hydrocarbon product 304, or a combination thereof transported to the electric reactor 104 may be adjusted based on an availability of emission-free energy for the electric reactor 104. The first portion 112a, the recycled off-gas 302, the hydrocarbon product 304, or a combination thereof can be heated prior to being received by the electric reactor 104. In other examples, the first portion 112a, the recycled off-gas 302, the hydrocarbon product 304, or a combination thereof can be heated upon being received by the electric reactor 104 but prior to being used in a reaction in the electric reactor 104. Additionally or alternatively, the electric reactor 104 may be configured to heat the first portion 112a, the recycled off-gas 302, the hydrocarbon product 304, or a combination thereof using electrical power or otherwise with a power source that does not directly generate emissions to the atmosphere.

At block 404, a heated first reactor effluent 114 is generated by the electric reactor 104 using the first portion 112a, the recycled off-gas 302, the hydrocarbon product 304, or a combination thereof. The electric reactor 104 can generate the heated first reactor effluent 114 using electric heat. The electric reactor 104 can cause an rWGS reaction to take place using the first portion 112a, the recycled off-gas 302, the hydrocarbon product 304, or a combination thereof. The first portion 112a, the recycled off-gas 302, the hydrocarbon product 304, or a combination thereof can be transported within the electric reactor 104 to contact a first catalyst bed to cause the rWGS reaction. The rWGS reaction may cause hydrogen and carbon dioxide from the first portion 112a, the recycled off-gas 302, the hydrocarbon product 304, or a combination thereof to convert to the heated first reactor effluent 114, which can include carbon monoxide and water. In some examples, the rWGS reaction may involve heating the first portion 112a, the recycled off-gas 302, the hydrocarbon product 304, or a combination thereof. The electric reactor 104 may provide the heat for the first portion 112a, the recycled off-gas 302, the hydrocarbon product 304, or a combination thereof using electricity or other suitable fuel source that does not involve fire or direct emissions to the atmosphere. The heated first reactor effluent 114 can be transported to a separate reactor, such as the heat exchanger reactor 106, to facilitate producing a reactor output 116 that can include syngas.

At block 406, the heated first reactor effluent 114 and a second portion 112b of mixed feedstock is received at a heat exchanger reactor such as the heat exchanger reactor 106. The second portion 112b of mixed feedstock may be similar or identical to the first portion 112a of mixed feedstock. For example, the second portion 112b of mixed feedstock may have similar or identical amounts or ratios of hydrogen and carbon dioxide. In other examples, the second portion 112b of mixed feedstock may have differing amounts or ratios of hydrogen and carbon dioxide. In a particular example, a total volume or amount of the second portion 112b of feedstock transported to the heat exchanger reactor 106 may be adjusted based on an availability of emission-free energy for the heat exchanger reactor 106.

The second portion 112b of mixed feedstock can be heated prior to being received by the heat exchanger reactor 106, subsequent to being received by the heat exchanger reactor 106, or a combination thereof. For example, the heat exchanger reactor 106 can use electricity to heat the second portion 112b of mixed feedstock upon receiving the second portion 112b of mixed feedstock. In another example, the second portion 112b of mixed feedstock may be heated in transport lines while being transported to the heat exchanger reactor 106. In another example, the heat exchanger reactor 106 can receive the second portion 112b of mixed feedstock and the heated first reactor effluent 114, and heat from the heated first reactor effluent 114 can be used to provide at least a preheat for the second portion 112b of mixed feedstock as well as driving the rWGS reaction.

At block 408, a reactor output 116, which includes syngas, is generated. The heat exchanger reactor 106 can facilitate one or more reactions, such as an rWGS reaction, using the heated first reactor effluent 114 and the second portion 112b of mixed feedstock to generate the reactor output 116. For example, the heat exchanger reactor 106 can receive the heated first reactor effluent 114, can receive the second portion 112b of mixed feedstock, and can cause the second portion 112b of mixed feedstock to be heated prior to the one or more reactions. The heated inputs can be transported to a second catalyst bed that can cause the one or more reactions to take place. The one or more reactions can generate the reactor output 116 that can include syngas, which may be or include hydrogen gas, hydrogen-based gas, or hydrogen-based material.

In some examples, the reactor output 116 can be further processed or refined prior to being output or otherwise used. For example, the reactor output 116 can be transported to a condensate subsystem 118, to a purification subsystem 120, to a synthesis plant 122, to other suitable post-processing devices, or to any combination thereof. The condensate subsystem 118 may cool the reactor output 116 to condense contaminants out of the reactor output 116 and to recover heat from the reactor output 116 to recycle to the electric reactor 104 or the heat exchanger reactor 106. The purification subsystem 120 can purify the reactor output 116 by removing carbon dioxide, ammonia-based contaminants, and other contaminants. The synthesis plant 122 may receive the condensed, purified rWGS output and may generate usable product such as fuels, methanol, ethanol, olefins, plastics, and the like.

At block 410, the recycled off-gas 302 is generated and recycled using the reactor output 116. The synthesis plant 122, or any other suitable post-processing subsystem, can use the reactor output 116 to generate syngas product 130, which can include usable fuels, hydrocarbon products, or the like. By generating the syngas product 130, one or more byproducts, such as the recycled off-gas 302, can be generated. Additionally or alternatively, a portion of the syngas product 130 may be converted to, or otherwise used as, recycled off-gas 302. The synthesis plant 122, or any other suitable post-processing subsystem, can transmit the recycled off-gas 302 to the feedstock mixer 102, to the electric reactor 104, or the like to allow the recycled off-gas 302 to be used in subsequent rWGS reactions or otherwise suitably in the electric reactor 104, the heat exchanger reactor 106, or the like.

One specific example is provided in the below table in which an rWGS unit is coupled to a downstream Fischer Tropsch (FT) and upgrading unit to produce synthetic fuels including gasoline, diesel and sustainable aviation fuels. The light off-gasses from the FT and upgrading unit are recycled to the main reactor. The base case corresponds to the current state of the art scheme with a fired reactor and heat exchanger reactor, where the firing is supplied with hydrogen make-up fuel. The improved reactor system described herein, which utilizes an electric reactor, is also shown in the table below. In both scenarios, the heat integration is applied to produce all required steam internally inside the rWGS unit. In these examples, the CO₂ concentration of the product syngas is reduced to 1 vol% and the captured CO₂ is recycled as a feedstock for the rWGS reaction.

**Table 1**

| | **Base Case** | **Improved Reactor System** |
|---|---|---|
| Hydrogen consumption [kg H₂/kg syngas) | 0.154 | 0.130 |
| CO₂ feed [kg CO₂/kg syngas] | 0.97 | 0.94 |
| Power requirement for rWGS unit [kW / kg syngas] | 0.120 | 1.03 |
| Power requirement for H₂ electrolyzers [Kw / kg syngas] | 8.02 | 6.77 |
| Total power requirement [Kw / syngas] | 8.14 | 7.80 |

The above example clearly indicates that the system described herein reduces the overall hydrogen consumption. Surprisingly, this is not only from the elimination of hydrogen as a fuel, but also the hydrogen feed to the unit is reduced by almost 3% due to better utilization of the available heat for driving reactions. This is shown by the reduction of the required CO₂ feed per syngas product, indicating a higher efficiency for converting hydrogen to syngas. The combined reduction of hydrogen required for the process is up to 16%, which can also translate into a 16% savings in power for electrolyzers as well as a 16% smaller electrolyzer facility. The rWGS unit requires additional power for the electric reactors, which results in an overall power consumption reduction of more than 4%. The combined power savings, and better utilization of CO₂ and hydrogen, thus yields improved carbon intensity and energy efficiency.

The foregoing description of certain examples, including illustrated examples, has been presented only for the purpose of illustration and description and is not intended to be exhaustive or to limit the disclosure to the precise forms disclosed. Numerous modifications, adaptations, and uses thereof will be apparent to those skilled in the art without departing from the scope of the disclosure. For instance, any examples described herein can be combined with any other examples to yield further examples.

## Claims

1. A system comprising:
a feedstock mixer coupled with a hydrogen source and a carbon dioxide source to provide a mixed feedstock input that includes hydrogen gas and carbon dioxide;
an electric reactor coupled with the feedstock mixer to receive a first portion of the mixed feedstock, the electric reactor uses electricity to generate heat to facilitate a reverse water-gas shift (rWGS) or steam reforming process using the first portion of the mixed feedstock, to produce a heated first reactor effluent as a byproduct; and
a heat exchanger reactor coupled with:
the feedstock mixer to receive a second portion of the mixed feedstock to generate an rWGS output that includes syngas; and
the electric reactor to receive the heated first reactor effluent to provide heat
to facilitate generating the rWGS output;
optionally, further comprising one or more post-processing subsystems coupled with the heat exchanger reactor, wherein the one or more post-processing subsystems receive the rWGS output and generate a purified syngas product from the rWGS output.

2. The system of claim 1, wherein the feedstock mixer combines recycled off-gas from a post-processing subsystem with the first portion of the mixed feedstock to generate recycled combined feedstock, and wherein the electric reactor receives the recycled combined feedstock and generates the heated first reactor effluent using the recycled combined feedstock.

3. The system of claim 1, wherein:
the electric reactor comprises a first catalyst bed, and wherein the electric reactor increases a first temperature of the first portion of the mixed feedstock prior to the first portion of the mixed feedstock contacting the first catalyst bed; and
the heat exchanger reactor comprises a second catalyst bed, and wherein the heat exchanger reactor increases a second temperature of the second portion of the mixed feedstock prior to the second portion of the mixed feedstock contacting the second catalyst bed;
optionally, wherein the electric reactor comprises a first electric heater to increase the first temperature, and wherein the heat exchanger reactor receives the heated first reactor effluent and uses heat from the heated first reactor effluent to increase the second temperature.

4. The system of claim 1, wherein the system generates the rWGS output that includes the syngas without generating direct emissions to the atmosphere.

5. The system of claim 1, wherein an amount of the first portion of the mixed feedstock is adjustable based at least in part on an availability of electricity for the electric reactor.

6. A method comprising:
receiving, at an electric reactor of a syngas generation system, a first portion of a mixed feedstock that includes hydrogen gas and carbon dioxide;
generating, by the electric reactor, heated first reactor effluent that includes carbon monoxide and water;
receiving, by a heat exchanger reactor of the syngas generation system, a second portion of the mixed feedstock and the heated first reactor effluent; and
generating, by the heat exchanger reactor and using heat from the heated first reactor effluent, an rWGS output that includes syngas;
optionally, further comprising generating, by one or more post-processing subsystems of the syngas generation system, coupled with the heat exchanger reactor, a purified syngas product from the rWGS output.

7. The method of claim 6, wherein a feedstock mixer receives the first portion of the mixed feedstock and recycled off-gas from a post-processing subsystem of the syngas generation system, combines the first portion of the mixed feedstock with the recycled off-gas to generate a combined feedstock, and provides the combined feedstock to the electric reactor for use in generating the heated first reactor effluent.

8. The method of claim 6, further comprising:
increasing a first temperature of the first portion of the mixed feedstock prior to the first portion of the mixed feedstock contacting a first catalyst bed of the electric reactor; and
increasing a second temperature of the second portion of the mixed feedstock prior to the second portion of the mixed feedstock contacting a second catalyst bed of the heat exchanger reactor;
optionally, wherein increasing the first temperature comprises using an electric heater of the electric reactor to increase the first temperature, and wherein increasing the second temperature comprises using heat from the heated first reactor effluent to increase the second temperature.

9. The method of claim 6, wherein the rWGS output that includes the syngas is generated without generating direct emissions to the atmosphere.

10. The method of claim 6, wherein an amount of the first portion of the mixed feedstock is adjusted based at least in part on an availability of electricity for the electric reactor.

11. A system comprising:
an electric reactor coupled with a feedstock mixer to receive a first portion of mixed feedstock and recycled off-gas, the electric reactor including an electrically operated heater to generate heat to facilitate a reverse water-gas shift (rWGS) or steam reforming process using the mixed feedstock and the recycled off-gas, to produce a heated first reactor effluent as a byproduct;
a heat exchanger reactor coupled with:
the feedstock mixer to receive a second portion of the mixed feedstock to generate an rWGS output that includes syngas; and
the electric reactor to receive the heated first reactor effluent to provide heat to facilitate generating the rWGS output; and
one or more post-processing subsystems coupled with the heat exchanger reactor to generate a purified syngas product and the recycled off-gas.

12. The system of claim 11, wherein the feedstock mixer combines the recycled off-gas with the first portion of the mixed feedstock to generate recycled combined feedstock, and wherein the electric reactor receives the recycled combined feedstock and generate the heated first reactor effluent using the recycled combined feedstock.

13. The system of claim 11, wherein:
the electric reactor comprises a first catalyst bed, and wherein the electric reactor increases a first temperature of the first portion of the mixed feedstock prior to the first portion of the mixed feedstock contacting the first catalyst bed; and
the heat exchanger reactor comprises a second catalyst bed, and wherein the heat exchanger reactor increases a second temperature of the second portion of the mixed feedstock prior to the second portion of the mixed feedstock contacting the second catalyst bed;
optionally, wherein the electric reactor comprises a first electric heater that increases the first temperature, and wherein the heat exchanger reactor receives the heated first reactor effluent and use heat from the heated first reactor effluent to increase the second temperature.

14. The system of claim 11, wherein the system generates the rWGS output that includes the syngas without generating direct emissions to the atmosphere.

15. The system of claim 11, wherein an amount of the first portion of the mixed feedstock is adjustable based at least in part on an availability of electricity for the electric reactor.
